# FASCICULE DE BREVET EUROPEEN

(11) **EP 2 596 623 B1**
(45) Date de publication et mention de la délivrance du brevet: **16.10.2019**
(21) Numéro de dépôt: 11734159.4
(22) Date de dépôt: 22.07.2011
(51) Int. Cl.: H04N 5/00, H04N 7/167

(54) **PROCEDE DE DETECTION D'UNE UTILISATION ILLICITE D'UN PROCESSEUR DE SECURITE**
METHODE ZUM NACHWEIS DER ILLEGALEN NUTZUNG EINES SICHERHEITS-PROZESSOREINHEIT
METHOD FOR DETECTING ILLEGAL USE OF A SECURITY PROCESSOR

(30) Priorité: 23.07.2010 FR 1056031
(43) Date de publication de la demande: 29.05.2013
(73) Titulaire: Viaccess, 92057 Paris La Defense (FR)
(72) Inventeur: BOIVIN, Mathieu, F-95490 Vaureal (FR); DUBROEUCQ, Gilles, F-28130 St Piat (FR)
(74) Mandataire: Colombo, Michel
(86) Numéro de dépôt international: PCT/EP2011/062689
(87) Numéro de publication internationale: WO 2012/010706

(56) Documents cités:
- EP-A1- 1 447 976
- EP-A1- 1 742 474
- FRANCIS ET AL: "Countermeasures for attacks on satellite TV cards using open receivers", AUSTRALASIAN INFORMATION SECURITY WORKSHOP.: DIGITAL RIGHTSMANAGEMENT, XX, XX, 6 novembre 2004 (2004-11-06), pages 1-6, XP002333719,

## Description

L'invention concerne un procédé de détection d'une utilisation illicite d'un processeur de sécurité utilisé pour le désembrouillage de différents contenus multimédias diffusés sur plusieurs canaux respectifs. L'invention concerne également ce processeur de sécurité ainsi qu'un support d'enregistrement d'informations pour la mise en oeuvre de ce procédé.

Le déposant connait des procédés de détection d'une utilisation illicite comportant :
- la réception par le processeur électronique de sécurité de messages ECM_{i,t} (Entitlement Control Message) pour désembrouiller une succession temporelle de cryptoperiodes d'un canal embrouillé i, chaque message ECM_{i,t} contenant au moins un cryptogramme d'un mot de contrôle CW_{i,t} permettant de désembrouiller une cryptopériode CP_{i,t} du canal i, l'indice i identifiant le canal et l'indice t étant un numéro d'ordre,
- à chaque réception par le processeur de sécurité d'un nouveau message ECM_{i,c}, la vérification que le message ECM_{i,c} est reçu à l'intérieur d'une fenêtre temporelle prédéterminée immédiatement consécutive au précédent message ECM_{i,p} reçu par ce processeur de sécurité pour le canal i, où les indices c et p sont deux valeurs spécifiques du numéro d'ordre t.

Par « fenêtre temporelle immédiatement consécutive au précédent message ECM_{i,p} », on désigne une fenêtre temporelle de durée prédéterminée débutant immédiatement après la réception du message ECM_{i,p}.

Par contenu multimédia on désigne un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Il est connu de diffuser plusieurs contenus multimédias en même temps. Pour cela, chaque contenu multimédia est diffusé sur son propre canal. Le canal utilisé pour transmettre un contenu multimédia est également connu sous le terme de « chaine ». Un canal correspond typiquement à une chaine de télévision. Cela permet à un utilisateur de choisir simplement le contenu multimédia qu'il souhaite visualiser en changeant de canal.

Pour sécuriser et soumettre la visualisation des contenus multimédias à certaines conditions, comme la souscription d'un abonnement payant par exemple, les contenus multimédias sont diffusés sous forme embrouillée et non pas en clair. Dans cette description, le canal est dit « embrouillé » lorsque le contenu multimédia diffusé sur ce canal est embrouillé. Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre. De plus, le mot de contrôle est généralement spécifique à un contenu multimédia, ce dernier étant aléatoirement ou pseudo aléatoirement tiré. Ainsi, si à un instant donné, N contenus multimédias sont simultanément diffusés sur N canaux, il existe N mots de contrôle différents et indépendants employés chacun pour embrouiller l'un de ces contenus multimédias.

Ici, les termes « embrouiller »/ « désembrouiller » sont considérés comme synonymes. De façon similaire, les termes « chiffrer »/ « déchiffrer » sont considérés comme des synonymes.

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenu dans des messages ECM (Entitlement Control Message).

On désigne ici par cryptogramme une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia. Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète est la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle en clair.

L'information secrète doit être préservée en lieu sûr. Pour cela, il a déjà été proposé de stocker l'information secrète dans des processeurs de sécurité tels que des cartes à puce directement connectées à chacun des terminaux.

Les contenus multimédias diffusés sur les différents canaux peuvent être coordonnés temporellement entre eux. Par exemple, les instants de diffusion des contenus multimédias sont réglés pour respecter les horaires de diffusion indiqués sur une grille de programmes préétablie. Chaque terminal sur un canal donné reçoit donc sensiblement en même temps le même contenu multimédia. On dit que ces contenus multimédias sont des flux « live » ou « linéarisés » car l'utilisateur ne contrôle par leur instant de transmission.

Dans ce contexte, des attaques ont été développées pour permettre à des utilisateurs de désembrouiller des contenus multimédias pour lesquels ils n'ont pas acquis licitement des droits d'accès.

L'une de ces attaques est connue sous le terme de « partage de carte » (« card sharing » en anglais). Cette attaque consiste à acquérir de façon licite un processeur de sécurité pour posséder les droits d'accès nécessaires pour désembrouiller plusieurs canaux. Ensuite, ce processeur de sécurité « licite» est introduit dans un serveur pirate qui reçoit des messages ECM d'une multitude de terminaux satellites pirates. Ainsi, lorsqu'un terminal satellite pirate souhaite désembrouiller illicitement un contenu multimédia diffusé, il reçoit ce contenu multimédia et transmet les messages ECM correspondants au serveur pirate. Le serveur pirate transmet ces messages ECM au processeur de sécurité licite. En réponse, le processeur de sécurité licite déchiffre les mots de contrôle contenus dans ces messages ECM et renvoie les mots de contrôle en clair au serveur pirate. Le serveur pirate transmet alors ces mots de contrôle en clair au terminal satellite pirate qui peut alors désembrouiller le contenu multimédia souhaité.

Dans cette attaque, le processeur de sécurité est utilisé normalement sauf qu'il traite les messages ECM d'une multitude de terminaux satellites alors que dans une utilisation licite, il ne traite que les messages ECM d'un seul terminal. Pour détecter cette attaque, il a déjà été proposé :
- de dénombrer les changements de canaux intervenus sur une période prédéterminée de temps (voir la demande de brevet EP 1 575 293),
- de dénombrer le nombre de canaux différents désembrouillés par le processeur de sécurité sur une période prédéterminée de temps (voir la demande de brevet EP 1 447 976), et
- de dénombrer le nombre de messages ECM reçus par le processeur de sécurité sur une période prédéterminée (voir la demande de brevet WO 2008 049 882).

Ces procédés de détection mettent tous à profit le fait qu'une attaque par partage de carte se traduit par :
- un nombre de changements de canaux (également connu sous le terme de « zapping ») anormalement élevé, et/ou
- un nombre de messages ECM reçus anormalement élevé.

La détection de cette attaque permet ensuite de mettre en place des contre-mesures.

Il existe également une autre attaque connue sous l'expression de « partage de mots de contrôle » (« control word sharing » en anglais) qui exploite, elle aussi, un processeur de sécurité licite pour désembrouiller un ou plusieurs canaux. Dans cette attaque, le processeur de sécurité licite est introduit dans un serveur de mots de contrôle. Ce serveur reçoit le contenu multimédia et en extrait les messages ECM. Les messages ECM extraits sont transmis au processeur de sécurité licite qui déchiffre alors les cryptogrammes des mots de contrôle et renvoie les mots de contrôle ainsi déchiffrés au serveur. Le serveur diffuse alors à un grand nombre de terminaux satellites pirates ces mots de contrôle, ce qui leur permet de désembrouiller illicitement les contenus multimédias. Par exemple, dans cette attaque, les terminaux satellites pirates s'abonnent simplement au flux de mots de contrôle en clair généré par le serveur et correspondant au canal qu'il souhaite désembrouiller.

Cette dernière attaque diffère de l'attaque par partage de carte par le fait que les terminaux satellites pirates n'ont pas besoin de transmettre au serveur les messages ECM du canal qu'il souhaite désembrouiller. Par conséquent, le nombre de messages ECM traités par le processeur de sécurité dans cette attaque est beaucoup moins élevé que dans une attaque par partage de carte. Toutefois, si pour cette attaque, le même processeur de sécurité est utilisé pour traiter les messages ECM de différents canaux, cette attaque peut encore être détectée à l'aide des procédés de détection connus présentés ci-dessus.

Plus récemment, les attaques par partage de carte ou de mots de contrôle ont été modifiées pour les rendre plus difficilement détectables. La modification consiste à utiliser non pas un seul processeur de sécurité licite mais, par exemple, autant de processeurs de sécurité licites qu'il y a de canaux désembrouillables. Chaque processeur de sécurité licite est alors dédié à un canal respectif, c'est-à-dire qu'il est uniquement utilisé pour traiter les messages ECM de ce canal en particulier ou d'un nombre très limité de canaux. Le reste de l'attaque est identique à ce qui a été décrit précédemment. Dans ces conditions, le processeur de sécurité ne voit plus de changement de canaux, ce qui rend inopérant les méthodes connues de détection. De l'état de la technique est également connu de :
- EP1742474A1,
- EP1447976A1, et
- Francis et Al : « Countermeasures for attack on sattelite TV cards using open receivers », Australasian Information Security Workshop, Digital Rights Management, 6 novembre 2004, pages 1-6

L'invention vise à remédier à cet inconvénient en proposant un nouveau procédé de détection d'une utilisation illicite d'un processeur de sécurité.

Elle a donc pour objet un procédé conforme à la revendication 1.

Le procédé ci-dessus permet la détection des attaques par partage de carte ou de mots de contrôle dans le cas où chaque carte est dédiée à un nombre restreint de canaux. En effet, dans ce cas, le processeur de sécurité traite sur de très longues périodes de temps les messages ECM d'un même canal. Cette absence prolongée de changement de canal est utilisée ici pour détecter une utilisation illicite du processeur de sécurité. Plus précisément, cette absence prolongée de changement de canal se traduit par le fait que le compteur Kchᵢ atteint le seuil prédéterminé ce qui déclenche la détection d'une utilisation illicite.

De plus, la robustesse du procédé de détection vis-à-vis de changements furtifs de canaux peut être ajustée en réglant la durée de la fenêtre temporelle.

Les modes de réalisation de ce procédé peuvent présenter une ou plusieurs des caractéristiques des revendications dépendantes.

Ces modes de réalisation présentent en outre les avantages suivants :
- la comparaison de la différence entre des étiquettes de temps ou de l'intervalle ΔV_{c,p} à l'intervalle ΔT permet d'éviter que le compteur Kchᵢ soit réinitialisé par un simple aller-retour du canal i vers un autre canal ce qui permettrait de déjouer facilement le procédé de détection décrit ici,
- le dénombrement du nombre de messages ECM reçus entre le message ECM_{i,p} et ECM_{i,c} puis la comparaison de ce nombre à un seuil permet également d'éviter que le procédé de détection soit déjoué par un simple aller-retour du canal i vers un autre canal ;
- la sélection du compteur Kchᵢ à incrémenter en fonction d'un identifiant du canal i permet de mettre en oeuvre le procédé de détection ci-dessus même lorsque le processeur de sécurité est destiné à recevoir des messages ECM pour désembrouiller simultanément X canaux différents ;
- le dénombrement du nombre de compteurs Kchᵢ ayant atteint ou dépassé leur seuil prédéterminé et la comparaison de ce nombre à la limite P de canaux simultanément désembrouillables permet de détecter de façon certaine une utilisation illicite ;
- le blocage du désembrouillage est l'affichage sur un écran d'un message demandant à l'utilisateur d'entreprendre une action spécifique rend la mise en oeuvre des attaques par partages de carte ou de mots de contrôle plus difficiles tout en limitant les conséquences négatives pour l'utilisateur en cas de fausse détection d'une utilisation illicite ;
- demander à l'utilisateur de changer de canal pour rétablir le désembrouillage de celui-ci permet de rétablir simplement ce désembrouillage en cas de fausse détection d'utilisation illicite tout en rendant les attaques par partage de carte ou de mots de contrôle plus difficiles.

L'invention a également pour objet un support d'enregistrement d'informations comportant des instructions pour l'exécution du procédé ci-dessus, lorsque ces instructions sont exécutées par un calculateur électronique.

Enfin, l'invention a également pour objet un processeur électronique de sécurité conforme à la revendication 11.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'émission et de réception de contenus multimédias embrouillés,
- la figure 2 est une illustration schématique d'une table utilisée dans le système de la figure 1, et
- la figure 3 est un organigramme d'un procédé de chiffrement et de déchiffrement de contenus multimédias dans lequel une utilisation illicite du processeur de sécurité peut être détectée à l'aide du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
- « Functional Model of Conditional Access System », EBU Review, Technical European Broadcasting Union, Brussels, BE, n° 266, 21 décembre 1995.

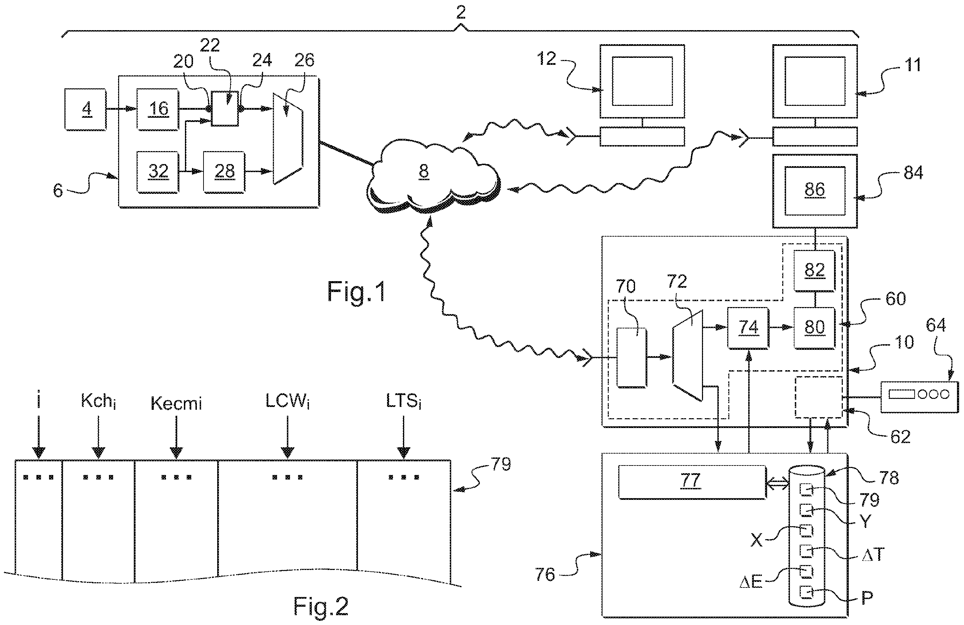

La figure 1 représente un système 2 d'émission et de réception de contenus multimédias embrouillés. Les contenus multimédias émis sont des contenus multimédias linéarisés. Par exemple, un contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle CW_{i,t} qui lui est fourni, ainsi qu'à un système 28 d'accès conditionnel, par un générateur 32 de clés. Le système 28 est plus connu sous l'acronyme CAS (Conditional Access System). L'indice i est un identifiant du canal sur lequel est diffusé le contenu mulimédia embrouillé et l'indice t est un numéro d'ordre identifiant la cryptopériode embrouillée avec ce mot de contrôle. Dans la suite de cette description, la cryptopériode actuellement désembrouillée par les terminaux est la cryptopériode t-1.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Pour chaque canal i, le système 28 génère des messages ECM_{i,t} (Entitlement Control Message) contenant au moins le cryptogramme CW*_{i,t} du mot de contrôle CW_{i,t} généré par le générateur 32 et utilisé par l'embrouilleur 22 pour embrouiller la cryptopériode t du canal i. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 insère également dans chaque ECM :
- l'identifiant i du canal,
- les cryptogrammes CW*_{i,t} et CW*_{i,t+1} des mots de contrôle CW_{i,t} et CW_{i,t+1} permettant de désembrouiller les cryptopériodes t et t+1 immédiatement consécutives du canal i,
- des étiquettes de temps TSₜ et TSₜ₊₁, ou « timestamp » en anglais, qui repèrent les instants auxquels doivent être jouées les cryptopériodes t et t+1,
- des conditions d'accès CA destinées à être comparées à des titres d'accès acquis par l'utilisateur, et
- une signature ou une redondance cryptographique MAC permettant de vérifier l'intégrité du message ECM.

Le message ECM contenant la paire de mots de contrôle CW_{i,t}/CW_{i,t+1} est noté ECM_{i,t} dans la suite de la description où :
- l'indice i identifie le canal, et
- l'indice t est un numéro d'ordre identifiant la position temporelle de ce message ECM par rapport aux autres messages ECM différents émis pour désembrouiller le canal i.

Ici, l'indice t identifie également la cryptopériode CP_{i,t} désembrouillable à l'aide du mot de contrôle CW_{i,t} contenu dans le message ECM_{i,t}. L'indice t est unique pour chaque cryptopériode CP_{i,t}.

Les étiquettes de temps sont définies par rapport à une origine absolue indépendante du contenu multimédia diffusé et du canal sur lequel le contenu multimédia est diffusé.

Le même identifiant i est inséré dans tous les messages ECM_{i,t} contenant un cryptogramme CW*_{i,t} pour le désembrouillage des contenus multimédias diffusés sur ce canal i. A titre d'illustration, ici, l'embrouillage et le multiplexage des contenus multimédias est conforme au protocole DVB-Simulcrypt (ETSI TS 103 197). Dans ce cas, l'identifiant i peut correspondre à un couple « channel ID/stream ID » unique sur lequel sont envoyées toutes les requêtes de génération de message ECM pour ce canal.

Chaque message ECM_{i,t} comporte une paire CW*_{i,t}/CW*_{i,t+1} de cryptogrammes de mots de contrôle. Après déchiffrement, cette paire CW*_{i,t}/CW*_{i,t+1} de cryptogrammes permet d'obtenir une paire CW_{i,t}/CW_{i,t+1} de mots de contrôle. Le cryptogramme CW*_{i,t+1} contenu dans le message ECM_{i,t} est ici utilisé en tant que donnée chronologique permettant d'identifier le message message ECM_{i,t+1} immédiatement consécutif au message ECM_{i,t}. En effet, par exemple après déchiffrement de ces cryptogrammes CW*_{i,t} et CW*_{i,t+1}, il est possible de comparer le mot de contrôle CW_{i,t+1} avec le premier mots de contrôle de la paire de mots de contrôle contenue dans le message ECM_{i,t+1}. En cas de correspondance, cela signifie que le message ECM_{i,t+1} est effectivement le message immédiatement consécutif au message ECM_{i,t}. Il est également possible de comparer le mot de contrôle CW_{i,t} contenu dans le message ECM_{i,t} au second mot de contrôle de la paire contenue dans le message ECM_{i,t-1}. En cas de correspondance, cela établit que le message ECM_{i,t-1} est effectivement le message précédent immédiatement le message ECM_{i,t}.

Par exemple, les terminaux 10 à 12 sont identiques et seul le terminal 10 est décrit plus en détail.

Le terminal 10 est ici décrit dans le cas particulier où celui-ci est capable de désembrouiller simultanément deux canaux i, j différents. A cet effet, le terminal 10 comporte deux lignes 60 et 62 de désembrouillage permettant le désembrouillage simultané, respectivement, des canaux i, j. Par exemple, la ligne 60 désembrouille le canal i pour l'afficher sur un afficheur 84 tandis que, en parallèle, la ligne 62 désembrouille le canal j pour l'enregistrer à l'aide d'un enregistreur 64.

Par exemple, ces lignes 60 et 62 sont identiques et seule la ligne 60 va maintenant être décrite en détail.

La ligne 60 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM_{i,t} et EMM (Entitlement Management Message) à un processeur 76.

Le désembrouilleur 74 désembrouille le contenu multimédia embrouillé à partir du mot de contrôle transmis par le processeur 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur l'afficheur 84 équipé d'un écran 86.

L'afficheur 84 affiche en clair le contenu multimédia sur l'écran 86.

Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Par exemple, à cet effet, le processeur 76 est une carte à puce.

Dans ce mode de réalisation, le processeur 76 est commun aux lignes 60 et 62.

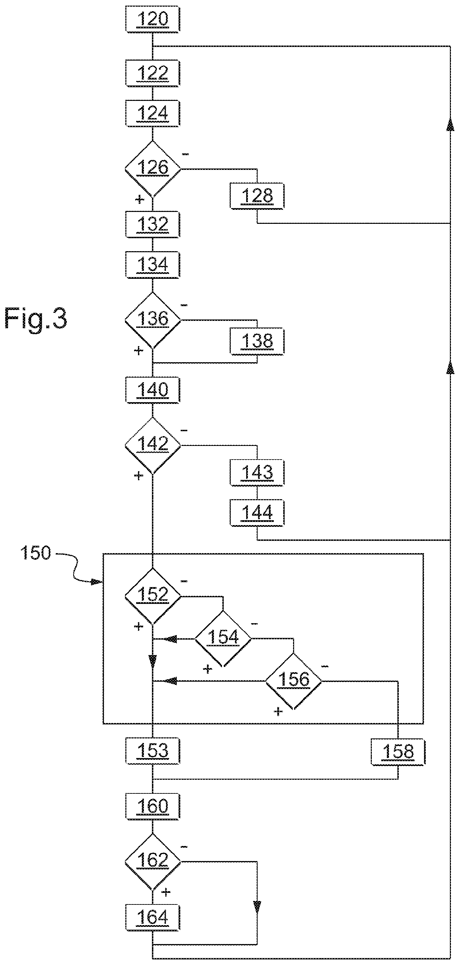

Par exemple, le processeur 76 est réalisé à l'aide d'un calculateur 77 électronique programmable apte à exécuter des instructions enregistrées sur un support d'enregistrement d'informations. A cet effet, le processeur 76 est connecté à une mémoire 78 contenant les instructions nécessaires pour l'exécution du procédé de la figure 3.

La mémoire 78 contient également :
- une table locale 79 pour l'analyse des changements de canal,
- un valeur initiale Y pour des compteurs Kchᵢ,
- un nombre X dont la valeur indique le nombre maximum de canaux simultanément surveillés,
- une limite P de canaux simultanément désembrouillables à l'aide du même processeur 76,
- un intervalle de temps Δ T, et
- un seuil Δ E correspondant à un nombre de messages ECM.

Typiquement, les valeurs de X, P, Δ T, Δ E et Y sont soit configurées une fois pour toute en usine lors de la fabrication du processeur 76 soit configurables après la mise en service du processeur 76 dans le terminal 10 par l'intermédiaire d'un message EMM spécifique transmis depuis le dispositif 6.

La figure 2 représente schématiquement un exemple de structure de la table 79. Cette table comporte cinq colonnes et X lignes. Les trois petits points indiqués dans chacune des colonnes signifient que les données de cette table 79 n'ont pas été représentées.

De la première à la cinquième colonne, ces colonnes contiennent, respectivement :
- l'identifiant i du canal surveillé,
- la valeur du compteur Kchᵢ,
- la valeur d'un compteur Kecmᵢ,
- la valeur du précédent mot de contrôle reçu LCWᵢ sur le canal i par le processeur 76, et
- la valeur de l'étiquette de temps LTSᵢ contenue dans le précédent message ECM_{i,p} reçu pour le canal i.

Dans la suite de la description, les valeurs « p » et « c » de l'indice t correspondent aux numéros d'ordre, respectivement, du précédent et du nouveau message ECM reçu pour le même canal i.

Le fonctionnement du système 2 va maintenant être décrit plus en détail en regard du procédé de la figure 3.

Initialement, lors d'une étape 120, le dispositif 6 diffuse plusieurs contenus multimédias différents simultanément sur différents canaux. Sur chaque canal, la cryptopériode t et la cryptopériode immédiatement suivante t+1 sont embrouillées avec les mots de contrôle, respectivement, CW_{i,t} et CW_{i,t+1}. Les messages ECM_{i,t} et ECM_{i,t+1} contenant les cryptogrammes CW*_{i,t} et CW*_{i,t+1} des mots de contrôle CW_{i,t} et CW_{i,t+1} sont multiplexés avec les contenus multimédias diffusés. Ce multiplexage permet de synchroniser la diffusion des mots de contrôle avec la diffusion des contenus multimédias. Ici, les cryptogrammes CW*_{i,t} et CW*_{i,t+1} sont transmis aux terminaux pendant la cryptopériode t-1 précédent la cryptopériode t.

Typiquement, chaque message ECM_{i,t} est répété plusieurs fois au sein d'une même cryptopériode. Par exemple, les messages ECM_{i,t} sont répétés toutes les 0,1 seconde à 0,5 seconde. La durée d'une cryptopériode est supérieure à cinq secondes et, de préférence, comprise entre 5 secondes et 10 minutes. Ici, la durée d'une cryptopériode est de 10 secondes.

Les contenus multimédias embrouillés sont reçus sensiblement en même temps par chacun des terminaux 10 à 12. Les étapes suivantes sont donc exécutées sensiblement en parallèle pour chacun de ces terminaux. Elles sont décrites dans le cas particulier du terminal 10.

De même, les opérations réalisées en parallèle par les lignes 60 et 62 sont similaires. Ici, elles sont uniquement décrites dans le cas particulier de la ligne 60.

Lors d'une étape 122, les contenus multimédias embrouillés et le message ECM_{i,t} est reçu par le récepteur 70.

Ensuite, lors d'une étape 124, le démultiplexeur 72 extrait le contenu multimédia embrouillé correspondant au canal i dont le désembrouillage est actuellement demandé par l'utilisateur. Lors de l'étape 124, le démultiplexeur 72 extrait également uniquement les messages ECM_{i,t} associés au canal i. Le démultiplexeur 72 transmet le contenu multimédia extrait vers le désembrouilleur 74. Le message ECM_{i,t} extrait est quant à lui transmis au processeur 76. Ce message ECM_{i,t} est le nouveau message ECM reçu pour le canal i et il est donc noté ECM_{i,c} à partir de maintenant.

Lors d'une étape 126, le processeur 76 compare les conditions d'accès CA contenues dans le message ECM_{i,c} à des titres d'accès préenregistrés dans la mémoire 78.

Si les titres d'accès de l'utilisateur ne correspondent pas aux conditions d'accès CA alors, lors d'une étape 128, le processeur 76 inhibe le désembrouillage du canal i par le terminal 10. Par exemple, à cet effet, le processeur 76 ne transmet aucun mot de contrôle au desembrouilleur 74.

Dans le cas où les titres d'accès correspondent aux conditions d'accès CA, lors d'une étape 132, le processeur 76 déchiffre les cryptogrammes CW*_{i,c} et CW*_{i,c+1} à l'aide d'une clé d'exploitation enregistrée dans la mémoire 78. Typiquement, cette clé d'exploitation est renouvelée une fois par mois.

Ensuite, lors d'une étape 134, le processeur 76 décrémente un compteur Nb-ECM d'un pas prédéterminé. Par exemple, le pas prédéterminé est égal à 1.

Lors d'une étape 136, le processeur vérifie si le compteur Nb-ECM a atteint un seuil prédéterminé S₀. Par exemple, ici, la valeur de ce seuil S₀ est égale à 0.

Dans l'affirmative, il procède à une étape 138 de sauvegarde de la table 79 dans une mémoire non volatile du processeur 76. De plus, lors de cette étape 138, le processeur réinitialise le compteur Nb-ECM à une valeur initiale Vₛₐᵥₑ. Par exemple, la valeur Vₛₐᵥₑ est égale à 200.

En cas de coupure de courant ou de réinitialisation du processeur 76, la table 79 est préchargée avec les valeurs de cette table enregistrées dans la mémoire non volatile. Ainsi, une coupure de courant ou une réinitialisation du processeur 76 ne permet pas de réinitialiser à leurs valeurs initiales les différentes données contenues dans la table 79.

Après l'étape 138 où directement après l'étape 136 si la valeur du compteur Nb-ECM n'a pas atteint le seuil S₀, le processeur 76 incrémente, lors d'une étape 140, tous les compteurs Kecmᵢ dont les valeurs sont enregistrées dans la table 79 d'un pas prédéterminé. Par exemple, le pas prédéterminé est égal à 1.

Lors d'une étape 142, le processeur vérifie si le canal, pour lequel le message ECM_{i,c} est reçu, est un canal surveillé. Un canal surveillé est un canal dont l'identifiant i est contenu dans la première colonne de la table 79. A cet effet, le processeur extrait l'identifiant i du canal contenu dans le message ECM_{i,c} reçu puis compare cet identifiant i à ceux contenus dans la première colonne de la table 79.

Si aucun des identifiants contenu dans la table 79 ne correspond à l'identifiant i, alors, lors d'une étape 143, le processeur 76 recherche dans cette table une ligne pour laquelle au moins l'une des conditions suivantes est satisfaite :
1) TSᵢ-LTSᵢ>Δ T, ou
2) Kecmᵢ>Δ E.

Si l'une des lignes de la table 79 remplit l'une des conditions 1) ou 2), cela signifie que le processeur 76 n'a pas reçu depuis longtemps de message ECM pour le canal correspondant à cette ligne. Le processeur 76 n'est donc plus utilisé pour le désembrouillage du canal correspondant à cette ligne. Lors d'une étape 144, cette ligne est alors libérée afin d'être utilisée pour surveiller le canal i. Pour cela, les cellules de cette ligne sont complétées de la façon suivante :
- l'identifiant i est enregistré dans la première colonne,
- la valeur du compteur Kchᵢ est réinitialisée, c'est-à-dire prise égale à Y,
- la valeur du compteur Kecmᵢ est réinitialisée, c'est-à-dire prise égale à zéro,
- le mot de contrôle CW_{i,c+1} est enregistré en tant que précédent mot de contrôle reçu LCWᵢ,
- l'étiquette de temps TSᵢ est entregistrée en tant que précédente étiquette de temps reçue LTSᵢ.

A l'issue de l'étape 144 le procédé retourne à l'étape 122 pour traiter un nouveau ECM reçu.

Dans le cas où le canal i est déjà surveillé, le processeur 76 sélectionne la ligne correspondante dans la table 79 et procède à une étape 150 lors de laquelle il vérifie que le message ECM_{i,c} est reçu à l'intérieur d'une fenêtre temporelle FT immédiatement consécutive au précédent message ECM_{i,p} reçu pour ce canal i. La durée de la fenêtre temporelle FT est supérieure ou égale à la durée d'une cryptopériode. Ici, la durée de la fenêtre FT est égale au maximum entre la durée D_{CP} d'une cryptopériode, la durée de l'intervalle Δ T et la durée Δ E*D_{CP}/P.

Ici, l'étape 150 commence par une opération 152 lors de laquelle le processeur 76 vérifie si le message ECM_{i,c} est immédiatement consécutif au précédent message ECM_{i,p}. A cet effet, il compare le dernier mot de contrôle LCWᵢ reçu, dont la valeur est enregistrée dans la quatrième colonne du tableau 79, au mot de contrôle CW_{i,c} contenu dans le message ECM_{i,c}.

Dans le cas où les mots de contrôles LCWᵢ et CW_{i,c} sont égaux, le processeur 76 procède directement à une étape 153. Lors de l'étape 153, le compteur Kchᵢ est décrémenté d'un pas prédéterminé par exemple égal à 1. Lors de cette étape, dans la table 79, les valeurs du mot de contrôle LCWᵢ et de l'étiquette LTSᵢ sont modifiées pour être égales, respectivement, au mot de contrôle CW_{i,c+1} et à TS_{c}. Enfin, seule la valeur du compteur Kecmᵢ est réinitialisée à zéro.

Dans le cas où les mots de contrôle LCWᵢ et CW_{i,c} sont différents, lors d'une opération 154, la différence entre l'étiquette de temps TS_{c} contenue dans le message ECM_{i,c} et l'étiquette de temps LTSᵢ contenue dans la table 79 est comparée à l'intervalle Δ T. Si cette différence est inférieure à l'intervalle Δ T, alors le message ECM_{i,c} est reçu à l'intérieur de la fenêtre FT et le processeur 76 procède directement à l'étape 153.

Dans le cas contraire, il procède à une opération 156 lors de laquelle il compare la valeur du compteur Kecmᵢ associée au canal i dans la table 79 au seuil Δ E. Dans le cas où la valeur de ce compteur Kecmᵢ est inférieure au seuil Δ E , le nouveau message ECM_{i,c} est reçu à l'intérieur de la fenêtre FT. Le procédé se poursuit donc par l'étape 153. Le nombre de messages ECM_{j,c} traités par le processeur 76 pour d'autres canaux est représentatif d'une durée écoulée depuis la réception du message ECM_{i,p}.

Dans le cas contraire, le message ECM_{i,c} est considéré comme n'étant pas reçu à l'intérieur de la fenêtre FT. Cela signifie que le processeur 76 n'est pas exclusivement utilisé pour désembrouiller le canal i. Il est alors procédé à une étape 158. Lors de l'étape 158, les compteurs Kchᵢ et Kecmᵢ sont réinitalisés à leurs valeurs initiales. Plus précisément, les valeurs des compteurs Kchᵢ et Kecmᵢ sont réinitialisées à, respectivement, la valeur Y et zero. De plus, lors de l'étape 158, le mot de contrôle CW_{i,c+1} est enregistré dans la table 79 en tant que dernier mot de contrôle reçu LCWᵢ. La valeur LTSᵢ est prise égale à l'étiquette TS_{c}.

Les opérations 154 et 156 permettent d'éviter qu'un changement furtif de canal conduise à une réinitialisation du compteur Kchᵢ. Un changement furtif de canal est un bref aller-retour vers un autre canal. Cette aller-retour est suffisamment bref pour ne pas se traduire par une interruption du désembrouillage du canal i gênante pour sa visualisation. En absence des opérations 154 et 156, ce changement furtif conduirait systématiquement à réinitialiser le compteur Kchᵢ ce qui pourrait être mis à profit pour déjouer le procédé de détection d'une utilisation illicite du processeur 76 décrit ici.

A l'issu de l'étape 153 ou 158, le processeur, lors d'une étape 160, dénombre le nombre de compteur Kchᵢ égaux à zéro et enregistre le résultat dans une variable Z.

Lors d'une étape 162, le processeur vérifie si la variable Z est strictement supérieure à zéro.

Dans l'affirmatif, cela signifie qu'une utilisation illicite du processeur 76 a été détectée. Dans ce cas, le processeur 76 procède à une étape 164 lors de laquelle il déclenche automatiquement une contre-mesure pour lutter contre cette utilisation illicite. Ici, la contre-mesure appliquée est choisie en fonction de la valeur de la variable Z. Typiquement, plus la valeur de la variable Z est élevée plus la contre-mesure appliquée est forte, c'est-à-dire gênante pour l'utilisateur.

Des exemples de contre-mesures sont donnés ci-dessous par ordre de force croissante :
1) Suspension du désembrouillage du canal ou de tous les canaux pendant une durée prédéterminée suivi d'une reprise automatique du désembrouillage de ces canaux une fois que ce délai prédéterminé s'est écoulé.
2) Suspension du désembrouillage de ce canal et affichage simultané sur l'écran d'un message demandant à l'utilisateur de changer de canal avant de revenir sur le canal i pour autoriser de nouveau le désembrouillage du canal i. Dans ce cas, le désembrouillage est de nouveau autorisé uniquement après que l'utilisateur ait changé du canal i vers un autre canal.
3) Suspension du traitement des messages ECM ce qui empêche donc le désembrouillage des canaux tant que le processeur 6 n'a pas été réinitialisé par exemple, en coupant l'alimentation du terminal.
4) Empêchement du désembrouillage du ou des canaux tant qu'une valeur enregistrée dans la mémoire non volatile du processeur 76 n'a pas été réinitialisée à l'aide d'un message EMM. Une telle contre-mesure peut obliger l'utilisateur à contacter l'opérateur pour provoquer l'envoi du message EMM permettant de déverrouiller le processeur 76.
5) Bloquage définitif du processeur 76 empêchant définitivement l'utilisation de ce processeur.

Lors de l'étape 164, la valeur de la variable Z est de préférence comparée à la limite P indiquant le nombre de canaux simultanément désembrouillables à l'aide du processeur 76. Si la variable Z est strictement supérieure à la limite P, cela indique de façon certaine que ce processeur 76 est utilisé de façon illicite. Dans ce cas, une contre-mesure forte telle que les contre-mesures 5) ou 6) indiquées ci-dessus est appliquée.

Si la valeur de la variable Z est nulle ou après l'étape 164, le procédé retourne à l'étape 122 pour traiter un nouveau message ECM.

Ici, la valeur initiale Y du compteur Kchᵢ, le pas de décrément et le seuil à atteindre pour déclencher la détection d'une utilisation illicite du processeur 76 sont choisis de manière à ce que ce seuil soit uniquement atteint après au moins 3h et, de préférence, après au moins 12h ou trois jours, sans changement de canal. Par exemple, ici la valeur Y est égale à 432000.

L'intervalle Δ T est supérieur à deux fois la différence entre les étiquettes de temps de deux messages ECM successifs. Par exemple, l'intervalle Δ T est au moins égale à deux minutes.

Le seuil Δ E est au moins supérieur à deux et, de préférence, supérieur à trois ou six.

De nombreux autres modes de réalisation sont possibles. Par exemple, les différents compteurs décrits ici peuvent être incrémentés d'un pas prédéterminé au lieu d'être décrémentés.

Le pas d'incrément ou de décrément peut être négatif. Ainsi, dans cette description, décrémenter un compteur est considéré comme étant exactement identique à incrémenter un compteur d'un pas négatif.

Les lignes 60, 62 peuvent être indépendantes l'une de l'autre comme décrit en regard de la figure 1 ou partager des ressources communes. Typiquement, le partage de ressources communes s'effectue en multiplexant temporellement leur usage. La ressource commune peut alors être le récepteur, le démultiplexeur ou le désembrouilleur.

En variante, le processeur de sécurité ou le terminal est équipé d'une horloge qui mesure l'intervalle de temps écoulé entre les instants de réception des messages ECM_{i,c} et ECM_{i,p}. Ensuite, c'est cet intervalle qui est utilisé à la place de la différence entre les étiquettes TS_{i,c} et TS_{i,p}. Dans cette variante, Δ T est supérieur à deux fois l'intervalle entre les instants de réception de deux messages ECM immédiatement consécutifs.

Une ou deux des opérations 152, 154 et 156 peuvent être omises. En particulier, les différentes étapes décrites ici pour éviter une réinitialisation du compteur Kchᵢ en cas de changement furtif de canal peuvent être omises.

Le désembrouillage de plusieurs canaux en même temps en utilisant un même processeur de sécurité peut également être utilisé dans d'autres contextes. Par exemple, c'est le cas, lorsqu'il est possible d'afficher simultanément plusieurs canaux sur le même écran. Cette possibilité est par exemple connue sous le terme anglais de « picture in picture ».

Les contre-mesures peuvent être appliquées uniquement aux canaux pour lesquelles le compteur Kchᵢ à atteint le seuil de détection d'une utilisation illicite. En variante, chaque contre-mesure est appliquée à tous les canaux.

Enfin, d'autres mécanismes pour vérifier que le message ECM_{i,c} est reçu à l'intérieur d'une fenêtre immédiatement consécutive au message ECM_{i,p} sont possibles. Par exemple, en variante, chaque message ECM comporte en plus un numéro d'ordre identifiant sa position par rapport aux autres messages ECM transmis pour le même canal. Dans ce cas, la réception du message ECM_{i,c} à l'intérieur de la fenêtre FT est, par exemple, vérifiée en comparant la différence entre les numéros d'ordre des messages ECM_{i,c} et ECM_{i,p} à un seuil prédéterminé. En particulier, la continuité entre le message ECM_{i,c} et le message ECM_{i,p} est contrôlé en vérifiant que leur numéro d'ordre respectif sont effectivement immédiatement consécutifs. Dans cette variante, il n'est alors pas nécessaire que chaque message ECM comporte à la fois les deux mots de contrôle CW_{i,t} et CW_{i,t+1}.

Dans cette variante, le numéro d'ordre est alors considéré comme une étiquette de temps puisqu'il constitue une mesure, en nombre de cryptopériodes, du nombre de cryptopériodes écoulées depuis une origine commune à tous les canaux.

De préférence, la durée de la fenêtre temporelle est strictement supérieure à la durée d'une cryptopériode.

## Revendications

1. Procédé de détection d'une utilisation illicite d'un processeur de sécurité utilisé pour le désembrouillage de différents contenus multimédias diffusés sur plusieurs canaux respectifs, ce procédé comportant :
- la réception (122) par le processeur électronique de sécurité de messages ECM_{i,t} (Entitlement Control Message) pour désembrouiller une succession temporelle de cryptoperiodes d'un canal embrouillé i, chaque message ECM_{i,t} contenant :
• au moins un cryptogramme d'un mot de contrôle CW_{i,t} permettant de désembrouiller une cryptopériode CP_{i,t} du canal i, l'indice i identifiant le canal et l'indice t étant un numéro d'ordre, et
• l'identifiant du canal i,
**caractérisé en ce que** le procédé comporte également :
- à chaque réception par le processeur de sécurité d'un nouveau message ECM_{i,c}, la vérification (150) que le message ECM_{i,c} est reçu à l'intérieur d'une fenêtre temporelle prédéterminée immédiatement consécutive au précédent message ECM_{i,p} reçu par ce processeur de sécurité pour le canal i, où les indices c et p sont deux valeurs spécifiques du numéro d'ordre t,
- l'incrémentation (153) d'un compteur Kchᵢ d'un pas prédéterminé à chaque fois que, après la vérification, le message ECM_{i,c} est reçu à l'intérieur de la fenêtre temporelle immédiatement consécutive au message ECM_{i,p} et, dans le cas contraire, la réinitialisation (158) du compteur Kchᵢ à sa valeur initiale,
- la détection (162) d'une utilisation illicite dès que le compteur Kchᵢ atteint un seuil prédéterminé.

2. Procédé selon la revendication 1, dans lequel chaque message ECM_{i,t} reçu comporte aussi une donnée chronologique permettant d'identifier le message ECM_{i,t-1} immédiatement précédent ou le message ECM_{i,t+1} immédiatement consécutif, et le procédé comporte la vérification (150) que le message ECM_{i,c} est reçu à l'intérieur de la fenêtre temporelle en vérifiant (152) que le nouveau message ECM_{i,c} reçu est le message immédiatement consécutif au précédent message ECM_{i,p} à partir de la donnée chronologique contenue dans le message ECM_{i,c} ou ECM_{i,p}.

3. Procédé selon la revendication 1 ou 2, dans lequel le procédé comporte la vérification (150) que le message ECM_{i,c} est reçu à l'intérieur de la fenêtre temporelle en vérifiant (154) que la différence entre des étiquettes de temps TS_{c} et TSₚ comprises, respectivement, dans les messages ECM_{i,c} et ECM_{i,p} est inférieure à un intervalle de temps ΔT prédéterminé plus grand que deux fois l'intervalle de temps entre des étiquettes de temps de messages ECM_{i,t} et ECM_{i,t+1} immédiatement consécutifs.

4. Procédé selon l'une quelconque des revendications précédentes, dans lequel le procédé comporte :
- la mesure d'un intervalle ΔV_{c,p} de temps entre des instants de réception des messages ECM_{i,c} et ECM_{i,p} , et
- la vérification que le message ECM_{i,c} est reçu à l'intérieur de la fenêtre temporelle en vérifiant que l'intervalle ΔV_{c,p} mesuré est inférieur ou égal à un intervalle ΔT prédéterminé plus grand que deux fois un intervalle ΔV_{t,t+1} de temps mesurable entre des instants de réception de messages ECM_{i,t} et ECM_{i,t+1} immédiatement consécutifs.

5. Procédé selon l'une quelconque des revendications précédentes, dans lequel le procédé comprend :
- le dénombrement (140, 153, 158) des nouveaux messages ECM_{j,c} reçus par ce processeur de sécurité pour des canaux autres que le canal i depuis le dernier message ECM_{i,p} reçu, et
- la vérification (150) que le message ECM_{i,c} est reçu à l'intérieur de la fenêtre temporelle en vérifiant (156) que le nombre de nouveaux messages ECM_{j,c} reçus pour d'autres canaux que le canal i atteint ou dépasse un seuil prédéterminé supérieur à deux.

6. Procédé selon l'une quelconque des revendications précédentes, dans lequel le procédé comporte la sélection (150) du compteur Kchᵢ à incrémenter parmi X compteurs Kchⱼ possibles, où X est un entier supérieur ou égal à deux, en fonction d'un identifiant du canal i contenu dans le message ECM_{i,c}.

7. Procédé selon la revendication 6, dans lequel le procédé comporte :
- le dénombrement (162) des canaux associés à un compteur Kchᵢ ayant atteint ou dépassé leurs seuils prédéterminés respectifs,
- la comparaison (164) du nombre Z de compteur Kchᵢ ayant atteint ou dépassé leurs seuils prédéterminés respectifs à une limite prédéterminée P égale au nombre maximum de canaux simultanément désembrouillables à l'aide de ce processeur de sécurité, et
- si le nombre Z atteint ou dépasse la limite P, alors le déclenchement automatique d'une contre-mesure forte et, dans le cas contraire, le déclenchement d'une autre contre-mesure plus faible.

8. Procédé selon l'une quelconque des revendications précédentes, dans lequel, en réponse à la détection d'une utilisation illicite, le procédé comporte le déclenchement automatique (164) d'une contre-mesure consistant à empêcher le désembrouillage du canal i et à afficher sur un écran un message demandant à l'utilisateur d'entreprendre une action spécifique pour rétablir le désembrouillage du canal i.

9. Procédé selon la revendication 8, dans lequel l'action spécifique est un changement de canal.

10. Support (78) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

11. Processeur électronique (76) de sécurité pour un terminal utilisé pour le désembrouillage de différents contenus multimédias diffusés sur plusieurs canaux respectifs, ce processeur étant apte :
- à recevoir des messages ECM_{i,t} (Entitlement Control Message) pour désembrouiller une succession temporelle de cryptoperiodes d'un canal embrouillé i, chaque message ECM_{i,t} contenant :
• au moins un cryptogramme d'un mot de contrôle CW_{i,t} permettant de désembrouiller une cryptopériode CP_{i,t} du canal i, l'indice i identifiant le canal et l'indice t étant un numéro d'ordre, et
• l'identifiant du canal i,
**caractérisé en ce que** le processeur est également apte :
- à vérifier, à chaque réception d'un nouveau message ECM_{i,c}, que ce message ECM_{i,c} est reçu à l'intérieur d'une fenêtre temporelle prédéterminée immédiatement consécutive au précédent message ECM_{i,p} reçu par ce processeur de sécurité pour le canal i, où les indices c et p sont deux valeurs spécifiques du numéro d'ordre t,
- à incrémenter un compteur Kchᵢ d'un pas prédéterminé à chaque fois que, après la vérification, le message ECM_{i,c} est reçu à l'intérieur de la fenêtre temporelle immédiatement consécutive au message ECM_{i,p} et, dans le cas contraire, à réinitialiser le compteur Kchᵢ à sa valeur initiale,
- à détecter une utilisation illicite dès que le compteur Kchᵢ atteint un seuil prédéterminé.

## Patentansprüche

1. Verfahren zum Nachweisen einer illegalen Nutzung eines Sicherheitsprozessors, der für das Entwürfeln von verschiedenen Multimedia-Inhalten verwendet wird, die auf mehreren jeweiligen Kanälen gesendet werden, wobei dieses Verfahren aufweist:
- das Empfangen (122) durch den elektronischen Sicherheitsprozessor von Nachrichten ECM_{i,t} (Entitlement Control Message), um eine zeitliche Abfolge von Kryptoperioden eines verwürfelten Kanals i zu entwürfeln, wobei jede Nachricht ECM_{i,t} enthält:
• mindestens ein Kryptogramm eines Kontrollworts CW_{i,t}, das ermöglicht, eine Kryptoperiode CP_{i,t} des Kanals i zu entwürfeln, wobei der Index i den Kanal identifiziert und der Index t eine laufende Nummer ist, und
• die Kennung des Kanals i,
**dadurch gekennzeichnet, dass** das Verfahren auch aufweist:
- bei jedem Empfangen einer neuen Nachricht ECM_{i,c} durch den Sicherheitsprozessor das Überprüfen (150), dass die Nachricht ECM_{i,c} innerhalb eines vorbestimmten Zeitfensters unmittelbar nach der vorhergehenden Nachricht ECM_{i,p} empfangen wird, die von diesem Sicherheitsprozessor für den Kanal i empfangen wird, wobei die Indizes c und p zwei spezifische Werte der laufenden Nummer t sind,
- das Inkrementieren (153) eines Zählers Kchᵢ eines vorbestimmten Schritts, jedes Mal, wenn nach dem Überprüfen die Nachricht ECM_{i,c} innerhalb des Zeitfensters unmittelbar nach der Nachricht ECM_{i,p} empfangen wird, und, im gegenteiligen Fall, das Zurücksetzen (158) des Zählers Kchᵢ auf seinen Anfangswert,
- das Nachweisen (162) einer illegalen Nutzung, sobald der Zähler Kchᵢ einen vorbestimmten Schwellenwert erreicht.

2. Vorrichtung nach Anspruch 1, wobei jede empfangene Nachricht ECM_{i,t} auch ein chronologisches Datum aufweist, das ermöglicht, die unmittelbar vorhergehende Nachricht ECM_{i,t-1} oder die unmittelbar nachfolgende Nachricht ECM_{i,t+1} nachzuweisen, und das Verfahren das Überprüfen (150) aufweist, dass die Nachricht ECM_{i,c} innerhalb des Zeitfensters empfangen wird, indem ausgehend von dem chronologischen Datum, das in der Nachricht ECM_{i,c} oder ECM_{i,p} enthalten ist, überprüft wird (152), dass die neue empfangene Nachricht ECM_{i,c} die unmittelbar nachfolgende Nachricht nach der vorhergehenden Nachricht ECM_{i,p} ist.

3. Verfahren nach Anspruch 1 oder 2, wobei das Verfahren das Überprüfen (150) aufweist, dass die Nachricht ECM_{i,c} innerhalb des Zeitfensters empfangen wird, indem überprüft wird (154), dass der Unterschied zwischen Zeitmarkierungen TS_{c} und TSₚ, die jeweils in den Nachrichten ECM_{i,c} und ECM_{i,p} enthalten sind, niedriger als ein vorbestimmtes Zeitintervall ΔT ist, das mehr als zwei Mal so groß ist wie das Zeitintervall zwischen Zeitmarkierungen von unmittelbar aufeinander folgenden Nachrichten ECM_{i,t} und ECM_{i,t+1}.

4. Verfahren nach einem der vorhergehenden Ansprüche, wobei das Verfahren aufweist:
- das Messen eines Zeitintervalls ΔV_{c,p} zwischen Empfangszeitpunkten der Nachrichten ECM_{i,c} und ECM_{i,p} und
- das Überprüfen, dass die Nachricht ECM_{i,c} innerhalb des Zeitfensters empfangen wird, indem überprüft wird, dass das gemessene Intervall ΔV_{c,p} kleiner oder gleich einem vorbestimmten Intervall ΔT ist, das mehr als zwei Mal so groß ist wie ein Zeitintervall ΔV_{t,t+1}, das zwischen Empfangszeitpunkten von unmittelbar aufeinander folgenden Nachrichten ECM_{i,t} und ECM_{i,t+1} gemessen werden kann.

5. Verfahren nach einem der vorhergehenden Ansprüche, wobei das Verfahren aufweist:
- das Zählen (140, 153, 158) der neuen Nachrichten ECM_{j,c}, die von diesem Sicherheitsprozessor für andere Kanäle als den Kanal i empfangen werden, ausgehend von der letzten empfangenen Nachricht ECM_{i,p} und
- das Überprüfen (150), dass die Nachricht ECM_{i,c} innerhalb des Zeitfensters empfangen wird, indem überprüft wird (156), dass die Anzahl von neuen empfangenen Nachrichten ECM_{j,c}, die für andere Kanäle als den Kanal i empfangen werden, einen vorbestimmten Schwellenwert erreicht oder überschreitet, der größer als zwei ist.

6. Verfahren nach einem der vorhergehenden Ansprüche, wobei das Verfahren das Auswählen (150) in Abhängigkeit von einer Kennung des Kanals i, die in der Nachricht ECM_{i,c} enthalten ist, des zu inkrementierenden Zählers Kchᵢ unter X möglichen Zählern Kchⱼ aufweist, wobei X eine ganze Zahl größer als oder gleich zwei ist.

7. Verfahren nach Anspruch 6, wobei das Verfahren aufweist:
- das Zählen (162) der Kanäle, die mit einem Zähler Kchᵢ verbunden sind, der ihre jeweiligen vorbestimmten Schwellenwerte erreicht oder überschritten hat,
- das Vergleichen (164) der Zahl Z des Zählers Kchᵢ, der ihre jeweiligen vorbestimmten Schwellenwerte erreicht oder überschritten hat, mit einem vorbestimmten Grenzwert P, der gleich der maximalen Anzahl an Kanälen ist, die gleichzeitig mit Hilfe des Sicherheitsprozessors entwürfelt werden können, und
- wenn die Zahl Z den Grenzwert P erreicht oder überschreitet, dann das automatische Auslösen einer starken Gegenmaßnahme und, im gegenteiligen Fall, das Auslösen einer anderen schwächeren Gegenmaßnahme.

8. Verfahren nach einem der vorhergehenden Ansprüche, wobei das Verfahren als Antwort auf das Nachweisen einer illegalen Nutzung das automatische Auslösen (164) einer Gegenmaßnahme aufweist, die darin besteht, das Entwürfeln des Kanals i zu verhindern und auf einem Bildschirm eine Nachricht anzuzeigen, die den Benutzer auffordert, eine spezifische Maßnahme zu ergreifen, um das Entwürfeln des Kanals i wiederherzustellen.

9. Verfahren nach Anspruch 8, wobei die spezifische Maßnahme ein Kanalwechsel ist.

10. Medium (78) zum Aufzeichnen von Informationen, **dadurch gekennzeichnet, dass** es Anweisungen für das Ausführen eines Verfahrens nach einem der vorhergehenden Ansprüche aufweist, wenn diese Anweisungen von einem elektronischen Rechner ausgeführt werden.

11. Elektronischer Sicherheitsprozessor (76) für ein Endgerät, der für das Entwürfeln von verschiedenen von Multimedia-Inhalten verwendet wird, die auf mehreren jeweiligen Kanälen gesendet werden, wobei dieser Prozessor geeignet ist:
- Nachrichten ECM_{i,t} (Entitlement Control Message) zu empfangen, um eine zeitliche Abfolge von Kryptoperioden eines verwürfelten Kanals i zu entwürfeln, wobei jede Nachricht ECM_{i,t} enthält:
• mindestens ein Kryptogramm eines Kontrollworts CW_{i,t}, das ermöglicht, eine Kryptoperiode CP_{i,t} des Kanals i zu entwürfeln, wobei der Index i den Kanal identifiziert und der Index t eine laufende Nummer ist, und
• die Kennung des Kanals i,
**dadurch gekennzeichnet, dass** der Prozessor ebenfalls geeignet ist:
- bei jedem Empfangen einer neuen Nachricht ECM_{i,c} zu überprüfen, dass diese Nachricht ECM_{i,c} innerhalb eines vorbestimmten Zeitfensters unmittelbar nach der vorhergehenden Nachricht ECM_{i,p} empfangen wird, die von diesem Sicherheitsprozessor für den Kanal i empfangen wird, wobei die Indizes c und p zwei spezifische Werte der laufenden Nummer t sind,
- einen Zähler Kchᵢ eines vorbestimmten Schritts zu inkrementieren, jedes Mal, wenn nach dem Überprüfen die Nachricht ECM_{i,c} innerhalb des Zeitfensters unmittelbar nach der Nachricht ECM_{i,p} empfangen wird, und, im gegenteiligen Fall, den Zähler Kchᵢ auf seinen Anfangswert zurückzusetzen,
- eine illegale Nutzung nachzuweisen, sobald der Zähler Kchᵢ einen vorbestimmten Schwellenwert erreicht.

## Claims

1. Method for detecting an illegal use of a security processor used for the descrambling of different multimedia contents broadcast over several respective channels, this method comprising;
- the reception (122) by the electronic security processor of messages ECM_{i,t} (Entitlement Control Message) to descramble a temporal succession of cryptoperiods of a scrambled channel i, each message ECM_{i,t} containing:
• at least one cryptogram of a control word CW_{i,t} making it possible to descramble a cryptoperiod CP_{i,t} of the channel i, the index i identifying the channel and the index t being a serial number, and
• the identifier of the channel i,
**characterized in that** the method also comprises:
- on each reception by the security processor of a new message ECM_{i,c}, the verification (150) that the message ECM_{i,c} is received within a predetermined time window immediately consecutive to the preceding message EMC_{i,p} received by this security processor for the channel i, in which the indices c and p are two specific values of the serial number t,
- the incrementation (153) of a counter Kchᵢ of a predetermined pitch each time, after the verification, the message ECM_{i,c} is received within the time window immediately consecutive to the message ECM_{i,p} and, otherwise, the resetting (158) of the counter Kchᵢ to its initial value,
- the detection (162) of an illegal use as soon as the counter Kchᵢ reaches a predetermined threshold.

2. Method according to Claim 1, in which each message ECM_{i,t} received also comprises a chronological datum making it possible to identify the immediately preceding message ECM_{i,t-1} or the immediately consecutive message ECM_{i,t+1}, and the method comprises the verification (150) that the message ECM_{i,c} is received within the time window by verifying (152) that the new message ECM_{i,c} received is the message immediately consecutive to the preceding message ECM_{i,p} from the chronological datum contained in the message ECM_{i,c} or ECM_{i,p}.

3. Method according to Claim 1 or 2, in which the method comprises the verification (150) that the message ECM_{i,c} is received within the time window by verifying (154) that the difference between timestamps TS_{c} and TSₚ included, respectively, in the messages ECM_{i,c} and ECM_{i,p}, is less than a predetermined time interval ΔT greater than two times the time interval between time stamps of immediately consecutive messages ECM_{i,t} and ECM_{i,t+1}.

4. Method according to any one of the preceding claims, in which the method comprises:
- the measurement of a time interval ΔV_{c,p} between instants of reception of the messages ECM_{i,c} and ECM_{i,p}, and
- the verification that the message ECM_{i,c} is received within the time window by verifying that the measured interval ΔV_{c,p} is less than or equal to a predetermined interval ΔT_{t,t+1} greater than two times a measurable time interval ΔV between instants of reception or immediately consecutive messages ECM_{i,t} and ECM_{i,t+1}.

5. Method according to any one of the preceding claims, in which the method comprises:
- the counting (140, 153, 158) of the new messages ECM_{j,c} received by this security processor for channels other than the channel i from the last message ECM_{i,p} received, and
- the verification (150) that the message ECM_{i,c} is received within the time window by verifying (156) that the number of new messages ECM_{j,c} received for channels other than the channel i reaches or exceeds a predetermined threshold greater than two.

6. Method according to any one of the preceding claims, in which the method comprises the selection (150) of the counter Kchᵢ to be incremented out of X possible counters Kchⱼ, in which X is an integer greater than or equal to two, as a function of an identifier of the channel i contained in the message ECM_{i,c}.

7. Method according to Claim 6, in which the method comprises:
- the counting (162) of the channels associated with a counter Kchᵢ having reached or exceeded their respective predetermined thresholds,
- the comparison (164) of the number Z of counters Kchᵢ having reached or exceeded their respective predetermined thresholds to a predetermined limit P equal to the maximum number of channels that can be simultaneously descrambled using this security processor, and
- if the number Z reaches or exceeds the limit P, then the automatic triggering of a strong counter-measure and, otherwise, the triggering of another, weaker counter-measure.

8. Method according to any one of the preceding claims, in which, in response to the detection of an illegal use, the method comprises the automatic triggering (164) of a counter-measure consisting in preventing the descrambling of the channel i and in displaying on a screen a message asking the user to undertake a specific action to re-establish the descrambling of the channel i.

9. Method according to Claim 8, in which the specific action is a change of channel.

10. Information storage medium (78), **characterized in that** it comprises instructions for the execution of a method conforming to any one of the preceding claims, when these instructions are executed by an electronic computer.

11. Electronic security processor (76) for a terminal used for the descrambling of different multimedia contents broadcast over several respective channels, this processor being capable:
- of receiving messages ECM_{i,t} (Entitlement Control Message) to descramble a temporal succession of cryptoperiods of a scrambled channel i, each message ECM_{i,t} containing:
• at least one cryptogram of a control word CW_{i,t} making it possible to descramble a cryptoperiod CP_{i,t} of the channel i, the index i identifying the channel and the index t being a serial number, and
• the identifier of the channel i,
**characterized in that** the processor is also capable:
- of verifying, on each reception of a new message ECM_{i,c}, that this message ECM_{i,c} is received within a predetermined time window immediately consecutive to the preceding message ECM_{i,p} received by this security processor for the channel i, in which the indices c and p are two specific values of the serial number t,
- of incrementing a counter Kchᵢ of a predetermined pitch each time, after the verification, the message ECM_{i,c} is received within the time window immediately consecutive to the message ECM_{i,p} and, otherwise, of resetting the counter Kchᵢ to its initial value,
- of detecting an illegal use as soon as the counter Kchᵢ reaches a predetermined threshold.
